# EUROPÄISCHE PATENTANMELDUNG

(11) **EP 1 525 974 A1**
(43) Veröffentlichungstag der Anmeldung: **27.04.2005**
(21) Anmeldenummer: 04018084.6
(22) Anmeldetag: 30.07.2004
(51) Int. Cl.: B29C 70/34, B29B 9/14, F16J 15/10

(54) **Verfahren zur Herstellung von Formkörpern aus vliesstoffverstärktem PTFE**

(30) Priorität: 21.10.2003 DE 10349414
(71) Anmelder: Carl Freudenberg KG, 69469 Weinheim (DE)
(72) Erfinder: Klenk, Thomas, 69214 Eppelheim (DE); Kessler, Michael, 21217 Seevetal (DE); Bock, Eberhard, 69509 Mörlenbach (DE)

(57) **Zusammenfassung**

Die Erfindung betrifft ein Verfahren zur Herstellung von Formkörpem aus vliesstoffverstärktem PTFE, bei welchem Vliesstoffbahnen mit einer PTFE-Dispersion imprägniert und anschließend getrocknet werden, im Anschluß an den Trocknungsprozess wenigstens zwei Lagen aus Vliestoffbahnen zur Herstellung eines Rohlings miteinander verpresst werden, und der Rohling anschließend zu einem Formkörper weiterverarbeitet wird, welches dadurch gekennzeichnet ist, dass der Rohling im Anschluss an das Verpressen gesintert und der Formkörper aus dem gesinterten Rohling durch eine nachgeschaltete formgebende Bearbeitung gewonnen wird. Mit dem beschriebenen Verfahren lassen sich Formkörper aus vliesstoffverstärktem PTFE mit überragenden Eigenschaften, wie zum Beispiel höchste Verschleißfestigkeit, mit nahezu beliebiger Geometrie herstellen.

## Beschreibung

### Technisches Gebiet

Die Erfindung betrifft ein Verfahren zur Herstellung von Formkörpern aus vliesstoffverstärktem PTFE, bei welchem Vliesstoffbahnen mit einer PTFE-Dispersion imprägniert und anschließend getrocknet werden, im Anschluß an den Trocknungsprozess wenigstens zwei Lagen aus Vliestoffbahnen zur Herstellung eines Rohlings miteinander verpresst werden und der Rohling anschließend zu einem Formkörper weiterverarbeitet wird.

### Stand der Technik

Es ist bekannt, zur Abdichtung gegenüber aggressiven Medien, bei hohen Temperaturen oder mangelhafter Schmierung anstelle von Elastomer-Dichtungen Dichtelemente aus PTFE einzusetzen. PTFE zeichnet sich durch eine sehr hohe chemische Beständigkeit gegenüber fast allen abzudichtenden Medien über einen sehr weiten Temperaturbereich aus und besitzt überdies noch einen sehr geringen Reibungskoeffizienten. Allerdings besitzt reines bzw. unverstärktes PTFE insbesondere bei hohen Temperaturen eine hohe Fließneigung, die zu Vorspannungsverlusten und damit zu Leckagen führen kann.

Zur Verhinderung der Fließneigung von PTFE ist es bekannt, Gewebebahnen, z.B. aus Aramidfasern, mit einer PTFE-Dispersion zu imprägnieren. Das fertige Dichtelement besteht dann aus mehreren Lagen aus mit PTFE beschichtetem Gewebe. Bei dieser Lösung ist von Nachteil, dass sich das PTFE lediglich als Schicht auf der Oberfläche des Gewebes befindet und das Gewebe nicht vollständig durchdringt. Daraus resultiert ein schichtweiser Aufbau von Gewebe und PTFE was zu unterschiedlichen Reibungsverhältnissen und erhöhtem Verschleiß führt, da das Gewebe ein deutlich schlechteres Reibungsverhalten aufweist als das PTFE.

Eine weitere bekannte Maßnahme besteht darin, Dichtungen aus sog. PTFE-Compounds herzustellen. Zur Herstellung von PTFE-Compounds wird das PTFE mit anorganischen Füllstoffen, die beispielsweise in Form von kurzen bzw. kleinsten Fasern, Kügelchen, Körnchen (meist Durchmesser kleiner 1 mm) oder dergleichen vorliegen können, gemischt. Die Mischung wird in eine Form gegeben und in dieser Form verpresst. An das Verpressen schließt sich ein Sinterprozess an. Die Herstellung der Dichtungen erfolgt am gesinterten Körper mittels spanabhebender Bearbeitung. Nachteilig an dieser Methode ist, dass die Gefahr des Herauslösens der Füllstoffkörper aus der PTFE-Matrix bei starker mechanischer Beanspruchung der Dichtung im Betrieb besteht und die Verstärkung bei geringem Füllgewicht gegen Spaltextrusion, Kaltfluß und Kriechen ungenügend ist.

In der gattungsbildenden DE 101 48 715 A1 ist ein Verfahren zur Herstellung eines Dichtelements für eine Radialwellendichtung bekannt, bei welchem Vliesstoffbahnen mit einer PTFE-Dispersion imprägniert und dann getrocknet werden. Die getrockneten Vliesstoffbahnen werden anschließend in mehreren Lagen übereinander angeordnet und bei erhöhter Temperatur laminiert. Die Dichtelemente werden schließlich durch Ausstanzen aus den noch relativ weichen laminierten Vliesstoffbahnen herausgetrennt. Zur Erhöhung der Festigkeit und Druckstabilität können die fertig geformten Dichtelemente noch einer Nachbehandlung durch Sintern bei erhöhtem Druck und erhöhter Temperatur unterworfen werden.

Das bekannte Verfahren macht man sich den Effekt zunutze, dass Vliesstoff eine durch Nadeln oder Wasserstrahlverfestigung mechanisch gebundene, dreidimensionale, offene und poröse Struktur besitzt, die durch die mechanische Bindung auch bei hohen Temperaturen stabil ist. Durch die offene und poröse Struktur kann bei der Imprägnierung mit PTFE ein Gehalt bis zu 99% PTFE erreicht werden. Die offene Struktur ermöglicht eine vollständige Durchdringung des Vliesstoffes wodurch die Schmiereigenschaften von PTFE auch innerhalb des Gewebes und nicht nur auf den Oberflächen zu Verfügung stehen. Eine Spaltextrusion des PTFE wird durch die Bindung des PTFE an die Fasern des Vliesstoffes verhindert. Die bekannten Dichtelemente zeichnen sich aus diesem Grunde durch sehr gute Reibeigenschaften und höchste Verschleißfestigkeit aus. Nachteilig an diesem Verfahren ist, dass die Möglichkeiten der Formgebung sehr beschränkt sind. Formkörper mit komplexer Geometrie sind mit diesem Verfahren nicht herstellbar.

### Darstellung der Erfindung

Aufgabe der Erfindung ist, das gattungsgemäße Verfahren so weiterzuentwickeln, dass Formkörper aus vliesstoffverstärktem PTFE mit beliebiger geometrischer Gestalt herstellbar sind.

Diese Aufgabe wird erfindungsgemäß mit einem Verfahren mit allen Merkmalen des Patentanspruchs 1 gelöst. Auf vorteilhafte Ausgestaltungen nehmen die Unteransprüche Bezug.

Gemäß der Erfindung werden zur Herstellung von Formkörpern aus vliesstoffverstärktem PTFE Vliesstoffbahnen mit einer PTFE-Dispersion imprägniert und anschließend getrocknet. Im Anschluß an den Trocknungsprozess werden wenigstens zwei Lagen aus Vliestoffbahnen zur Herstellung eines Rohlings, beispielsweise in einer Preßform mit Stempel oder isostatisch, wahlweise kalt oder unter Temperatureinwirkung, miteinander verpresst. Vorzugsweise sollte beim Verpressen eine Temperatur von 280 °C nicht überschritten werden. Der Rohling wird anschließend in der Weise zu einem Formkörper weiterverarbeitet, dass er im Anschluss an das Verpressen gesintert und dann einer nachgeschalteten formgebenden Bearbeitung unterworfen wird. Ergänzend kann eine Nachimprägnierung mit PTFE vor dem Sintern zur Verringerung der Oberflächenporosität des Halbzeugs vorgesehen sein.

Es hat sich gezeigt, dass an einem vliesstoffverstärkten gesinterten PTFE-Rohling eine formgebende Bearbeitung, wie zum Beispiel Drehen, Fräsen, Stechen oder Wasserstrahlschneiden, möglich ist. Dieses Ergebnis ist um so überraschender, als aufgrund der großen Faserlängen des Verstärkungsmaterials Materials im Vergleich zu PTFE-Compounds und insbesondere bei sehr hartem Fasermaterial, wie z. B. Aramid, damit zu rechnen war, dass ein Materialabtrag auf diese Weise überhaupt nicht möglich sein bzw. das Material an den bearbeiteten Flächen ausbrechen würde.

Die endgültige Formgebung des vliesstoffimprägnierten Formkörpers erfolgt vorzugsweise durch nachgeschaltete spanabhebende Bearbeitungsmethoden, wie zum Beispiel Stechen, Drehen und Fräsen, aber auch durch Schneiden, insbesondere Wasserstrahlschneiden. Aber auch andere Bearbeitungsmethoden, insbeondere spanabhebende, wie Sägen, Schleifen, Feilen, Hobeln, Stossen, Räumen, Bohren, Honen, Läppen, Gravieren und dergleichen, können zum Einsatz kommen. Auch Stanzen wäre prinzipiell möglich, führt aber aufgrund der erheblich größeren Festigkeit des gesinterten Materials im Vergleich zum ungesintereten zu einem erheblichen Verschleiß der Stanzwerkzeuge und ist daher unwirtschaftlich. Ein weiterer Nachteil des Stanzens ist die bereits oben erwähnte Beschränkung auf einfache Geometrien.

Die oben aufgeführten Bearbeitungsmethoden erlauben eine hohe Flexibilität bei der Formgebung, wobei die überragenden Materialeigenschaften von vliesstoffverstärktem PTFE erhalten bleiben.

Als Vliesstoff wird vorzugsweise ein mechanisch gebundener Vliesstoff verwendet. Die mechanische Bindung des Vliesstoffs kann beispielsweise durch Wasserstrahlverfestigung oder Nadeln erfolgen. Dieses führt zu einer guten mechanischen Stützwirkung sowie Offenheit und Porosität. Außerdem kann der Vliesstoff aus Fasern oder aus Fasermischungen aus Polyamid, Polybenzinidazol, Polyester, Glas, Aramid, Polyacryl, Polyacrylnitril, preoxidiertem PAN, Kohle, Mineralen, z.B. auch Basalt, und/oder Graphit hergestellt sein.

Die Länge der Fasern beträgt vorzugsweise 3 bis 100 mm, besonders bevorzugt 3 - 20 mm bei einem Flächengewicht von 20 bis 800 g/m². Die relativ kurze Faserlänge erlaubt eine starke Porosität, was für die spätere Imprägnierung von Vorteil ist. Andererseits verhindern Fasern mit Faserlängen > 3 mm wirksam die Fließneigung des PTFE und damit eine Spaltextrusion, sowie ein gutes Verhaken der Fasermatrix untereinander, was wiederum ein Herauslösen der Fasern durch mechanische Beanspruchung beim Betrieb verhindert.

Die Vliesstoffbahnen haben vorzugsweise eine Dicke kleiner als 4 mm, besonders bevorzugt 0,5 bis 2 mm. Bei diesen Dicken wird schon bei kleinen Verweildauern von zum Beispiel einer Durchlaufgeschwindigkeit von 5 m/min im Imprägnierbad eine vollständige Durchdringung des Vliesstoffes mit PTFE erreicht.

Bevorzugt entspricht der PTFE Anteil einem Gewichtsgehalt von 50 bis 99% des mit PTFE imprägnierten Vlieses, wobei 99 % dem maximalen Sättigungsgrad des Vliesstoffes mit PTFE entspricht.

Der eingesetzte Vliesstoff wird vorzugsweise mit einer wässrigen PTFE- Dispersion imprägniert. Diese Dispersion kann auch anorganische Füllstoffe enthalten. Besonders gute Ergebnisse werden erreicht, wenn der PTFE- Dispersion bis zu 50 Gew.-% bezogen auf die Trockenmasse an PTFE an Graphit, Kohle, Talkum, Glimmer, Bronze, Ekonol, Kaolin, Silikate, Bornitrid und/oder Molybdändisulfid sowie Mischungen daraus als anorganische Füllstoffe zugegeben werden.

Es hat sich als vorteilhaft erwiesen, die Vliesstoffbahnen nach ihrer Imprägnierung durch Abquetschwalzen hindurchzuführen, um den Feststoff- bzw. Imprägniergehalt im Vlies definiert einzustellen.

Die Trocknung der imprägnierten Vliesstoffbahnen kann in einem Durchlaufofen bei 30 bis 300°C erfolgen. Die Trocknung in einem Durchlaufofen verhindert ein Auslaufen der Imprägnierung.

Zur Fertigung eines Rohlings werden wenigstens zwei mit PTFE getränkte Vliesstoffbahnen in einer Preßform angeordnet. Dies kann auf unterschiedliche Weise erfolgen, beispielsweise durch einfaches Übereinanderlegen von Vliesstofflagen. Durch das Übereinanderlegen können dünne Vliesstoffscheiben verwendet werden, die die vollständige Durchdringung mit PTFE gewährleisten. In einer weiteren Ausgestaltung der Erfindung wird die Vliesstoffbahn mindestens zweimal radial umeinander gewickelt und beispielsweise in eine Pressform eingelegt. Bei dieser Anordnung wird beim Pressvorgang eine gute innere Verdichtung des Materials erreicht, bei gleichzeitig gutem Verhaken der imprägnierten Vliesstoffbänder untereinander.

Es ist jedoch auch möglich die Vliesstoffbahn gezielt zu zerkleinem bzw. zu shreddern und die dadurch entstehenden Scheiben, Pellets, Streifen oder Fransen in die Form einzubringen. Die Scheiben/Pellets bzw. Streifen/Fransen dürfen dabei allerdings nicht kleiner als 1 mm werden, da ansonsten der Vorteil der größeren Faserlänge im Vergleich zu klassisch hergestelltem Compound verloren geht. Insbesondere sollen hier auch Abfälle, die bei den bei Stanzprozessen von PTFE-Vlies entstehen, weiterverwendet werden.

Das Verpressen der Vliestofflagen erfolgt vorzugsweise bei einem Druck von 5 bis 100 - MPa. Dieser Pressdruck führt zu einer guten inneren Verdichtung des Packungsmaterials bei einem guten Zusammenhalt der Vliesstoffbahnen. Die Temperatur liegt hierbei zwischen 20 und 300 °C. Beim Verpressen der Vliesstofflagen können beispielsweise Standardpressformen zum Einsatz kommen, bei denen ein in der Regel hydraulisch betätigbarer Stempel in die Pressform mit dem Rohling eingefahren wird. Bei einer solchen Pressform ist es jedoch möglich, dass sich in besonders gelagerten Fällen der axiale Preßdruck aufgrund von Reibung zum Beispiel nach unten hin zu stark abbaut und daher nicht gleichmäßig wirkt. Diese Probleme lassen sich bei Einsatz eines isostatischen Pressverfahrens sicher vermeiden. Isostatische Pressverfahren zeichnen sich dadurch aus, dass eine flexible Membran beim Pressen die über die gesamte Länge der Preßform angreift und so sicherstellt, dass über die ganze Bauteillänge der selbe Preßdruck herrscht.

In der sich anschließenden Sinterbehandlung, frei oder in der Pressform, vorzugsweise bei einer Temperatur von 340 bis 390°C, während einer Dauer von 60 bis 120 Min wird der Rohling fertig gestellt. Durch die Temperaturbehandlung wird der Rohling verfestigt, und die Spaltextrusionsfähigkeit wird nochmals verringert.

Vor dem Sintem kann durch nochmaliges PTFE-Tränken des Rohlings eine Verringerung der Oberflächenporosität erreicht werden.

In einer weiteren bevorzugten Ausführungsform der Erfindung wird vor dem Einfüllen des mit PTFE imprägnierten Vlieses in die Pressform zumindest eine Lage nicht imprägnierten Vlieses in die Pressform gegeben wird, die anschließend mit verpresst wird. Die Bereiche des Formkörpers, die durch das nicht-imprägnierte Vlies gebildet werden, können beispielsweise für einen Einlaufprozess mit einem speziellen Fett getränkt werden.

Weiterhin kann bei dem erfindungsgemäßen Verfahren vorgesehen sein, zur Herstellung der Rohling PTFE-getränkte Vliesbahnen mit unterschiedlichen Füllstoffen und/oder unterschiedlichen PTFE-Gehalten zu kombinieren. Auf diese Weise lassen Formkörper mit Bereichen mit unterschiedlichen Eigenschaften herstellen, beispielsweise Dichtungen mit zwei dynamischen Dichtflächen (z.B. innen und außen), die unterschiedlichen Betriebsbedingungen genügen. Zur Erzielung einer besonders guten Bindung zwischen den Vliesstofflagen kann bei der Herstellung des Rohlings noch ein Pulver aus PTFE-Compounds zugesetzt werden.

Das wie oben erfindungsgemäß hergestellten Endprodukte zeichnen sich durch hervorragende Gebrauchseigenschaften aus. Aufgrund der praktisch nicht möglichen Herauslösbarkeit der längeren Fasern gegenüber herkömmlichen Compounds sowie der 3D-Matrixverstärkung wird ein deutlich verbessertes Langzeitbetriebsverhalten gegenüber Spaltextrusion, Verschleiß sowie eine verbesserte Druckstandfestigkeit usw. erzielt. Die z.B. nach einer Drehbearbeitung erzielte Oberfläche eines vliesstoffverstärkten PTFE-Formkörpers ist erstaunlich gut.

Das erfindungsgemäße Verfahren ist zur Herstellung beliebiger Formkörper aus vliesstoffverstärktem PTFE geeignet. Vorzugsweise wird es zur Herstellung von Flachdichtungen, Dachmanschetten, Lippendichtungen, Nutringen, Axial- oder Radialgleitlagern bzw. -körpern eingesetzt.

Nachfolgend wird die Erfindung anhand eines Ausführungsbeispiels näher erläutert:

### Ausführung der Erfindung

Eine Nadelvliesbahn mit der Breite 300 mm (quasi endlos) aus Nomex-Fasem (Meta-Aramid) mit einem Flächengewicht von 100 g/m² und einer Dicke von ca. 1,2 mm wurde mit einer Imprägniergeschwindigkeit von 1 m/min mit einer wässrigen PTFE-Dispersion imprägniert. Die wässrige PTFE-Dispersion wies einen Feststoffgehalt von 60 % PTFE auf. Die imprägnierten Vliesstoffbahnen wurden in einem Durchlaufofen bei 200 °C getrocknet und anschließend gewickelt. Das Flächengewicht der imprägnierten Vliesstoffbahnen betrug nach der Trocknung ca. 1450 g/m². Zum Verpressen wurden 4 Lagen des imprägnierten PTFE-Vlieses in eine Rohrform (Innendurchmesser: 40 mm, Aussendurchmesser: 60 mm, Länge 500 mm) eingewickelt, wobei die Form bis zu einer Höhe von 500 mm gefüllt wurde. Danach wurde das PTFE-Vlies bei einem Druck von 50 MPa bei Raumtemperatur während einer Zeitdauer von ca. 5 Minuten mittels einer Hydraulikpresse verpresst. Der Rohling wurde schließlich der Form entnommen und dann während einer Zeitdauer von 2 Stunden frei bei 360 °C gesintert. Das aus der Form entnomme Sinterteil zeigte eine leicht bräunliche Farbe, die auf einen Temperaturbeeinflussung der Aramidfasern zurückzuführen ist. Die Oberfläche zeigte leichte Einrisse. Das Sinterteil wurde dann mittels eines 3-Backenfutters in eine Drehmaschine aufgenommen und aussen komplett überdreht. Nach erfolgreichem Spanvorgang war die Oberfläche überraschenderweise völlig frei von Einrissen. Darufhin wurde eine Dachmaschettengeometrie gedreht und abgestochen. Der Abstich über die ganze Querbreite des Sinterteils zeigte eine homogene und durchgehende Vliesverstärkung des gesamten Rohres. Die gesamte Form und Oberfläche der Dachmaschette enstprach den üblichen Anforderungen.

## Patentansprüche

1. Verfahren zur Herstellung von Formkörpern aus vliesstoffverstärktem PTFE, bei welchem Vliesstoffbahnen mit einer PTFE-Dispersion imprägniert und anschließend getrocknet werden, im Anschluß an den Trocknungsprozess wenigstens zwei Lagen aus Vliestoffbahnen zur Herstellung eines Rohlings miteinander verpresst werden, und der Rohling anschließend zu einem Formkörper weiterverarbeitet wird, **dadurch gekennzeichnet, dass** der Rohling im Anschluss an das Verpressen gesintert und der Formkörper aus dem gesinterten Rohling durch eine nachgeschaltete formgebende Bearbeitung gewonnen wird.

2. Verfahren nach Anspruch 1, **dadurch gekennzeichnet, dass** ein Vliesstoff aus Fasern oder Fasermischungen aus Polyamid, Polybenzinidazol, Polyester, Glas, Aramid, Polyacryl, Polyacrylnitril, preoxidiertem PAN, Kohle, Mineralen, Basalt, und/oder Graphit verwendet wird.

3. Verfahren nach Anspruch 1 oder 2, **dadurch gekennzeichnet, dass** Vliesstofflagen aus mechanisch gebundenem Vliesstoff mit einer Faserlänge von 3 bis 100 mm, insbesondere 3 bis 20 mm verwendet werden.

4. Verfahren nach einem der Ansprüche 1 bis 3, **dadurch gekennzeichnet, dass** ein Vliesstoff verwendet wird, dessen Flächengewicht vor der PTFE-Imprägnierung zwischen 20 bis 800 g/m² beträgt.

5. Verfahren nach einem der Ansprüche 1 bis 4, **dadurch gekennzeichnet, dass** Vliesstoffbahnen mit einer Dicke von < 4 mm, vorzugsweise 0,5 bis 2 mm verwendet werden.

6. Verfahren nach einem der Ansprüche 1 bis 5, **dadurch gekennzeichnet, dass** der PTFE- Anteil nach Imprägnierung des Ausgangsvlieses einem Gewichtsgehalt von 50 bis 99% des PTFE-Vlieses entspricht.

7. Verfahren nach einem der Ansprüche 1 bis 6, **dadurch gekennzeichnet, dass** die Vliesstofflagen mittels einer wässrigen PTFE-Dispersion imprägniert werden.

8. Verfahren nach einem der Ansprüche 1 bis 7, **dadurch gekennzeichnet, dass** der PTFE-Dispersion anorganische Füllstoffe zugegeben werden.

9. Verfahren nach einem der Ansprüche 1 bis 8, **dadurch gekennzeichnet, dass** der PTFE-Dispersion als anorganische Füllstoffe bis zu 50 Gew.-% bezogen auf die Trockenmasse an PTFE an Graphit, Kohle, Talkum, Glimmer, Bronze, Ekonol, Kaolin, Silikate, Bornitrid, Molybdänsulfid sowie Mischungen daraus zugegeben werden.

10. Verfahren nach einem der Ansprüche 1 bis 9, **dadurch gekennzeichnet, dass** die Vliesstoffbahnen nach ihrer Imprägnierung durch Abquetschwalzen hindurchgeführt werden.

11. Verfahren nach einem der Ansprüche 1 bis 10, **dadurch gekennzeichnet, dass** die Trocknung der imprägnierten Vliesstofflagen in einem Durchlaufofen bei 30 bis 300 °C erfolgt.

12. Verfahren nach einem der Ansprüche 1 bis 11, **dadurch gekennzeichnet, dass** das Verpressen der getrockneten Vliesstofflagen zu einem Rohling bei einem Druck von 5 bis 100 MPa erfolgt.

13. Verfahren nach einem der Ansprüche 1 bis 12, **dadurch gekennzeichnet, dass** der Rohling für eine Zeitdauer zwischen 60 und 120 Minuten bei einer Temperatur von 340 bis 390°C gesintert wird.

14. Verfahren nach einem der Ansprüche 1 bis 12, **dadurch gekennzeichnet, dass** der Formkörper durch eine spanabhebende Bearbeitungsmethode, vorzugsweise durch Drehen, Fräsen und/oder Stechen, oder durch Wasserstrahlschneiden aus dem gesineterten Rohling gewonnen wird.

15. Verfahren nach einem der Ansprüche 1 bis 14, **dadurch gekennzeichnet, dass** der Rohling durch Verpressen eines radialen, zumindest zweilagig umeinandergewickelten Stoffbandes aus mit PTFE imprägniertem Vlies hergestellt wird.

16. Verfahren nach einem der Ansprüche 1 bis 14, **dadurch gekennzeichnet, dass** der Rohling durch Verpressen von zumindest zwei übereinandergeschichteten Lagen aus mit PTFE imprägniertem Vlies hergestellt wird.

17. Verfahren nach einem der Ansprüche 1 bis 14, **dadurch gekennzeichnet, dass** zur Herstellung des Rohlings mit PTFE imprägnierte Vliesstoffbahnen zu Scheiben, Pellets, Streifen, Fransen oder dergleichen, mit einer maximalen geometrischen Ausdehnung, wie z. B. Pellet- oder Scheibendurchmesser oder Streifen- oder Fransenlänge, von < 1 mm, zerkleinert und die Scheiben, Pellets, Streifen, Fransen oder dergleichen in die Pressform gegeben wird.

18. Verfahren nach einem der Ansprüche 1 bis 17, **dadurch gekennzeichnet, dass** vor dem Einfüllen des PTFE-Vlieses zum Verpressen zumindest eine Lage nicht imprägnierten Vlieses in die Pressform gegeben wird, die mit verpresst wird.

19. Verfahren nach einem der Ansprüche 1 bis 18, **dadurch gekennzeichnet, dass** PTFE-Vliesstofflagen mit unterschiedlichen Füllstoffen und unterschiedlichen PTFE-Gehalten in die Preßform eingebracht werden.

20. Verfahren nach Anspruch 19, **dadurch gekennzeichnet, dass** ein Pulver aus PTFE-Compounds zugesetzt wird.
